# FASCICULE DE BREVET EUROPEEN

(11) **EP 1 195 870 B1**
(45) Date de publication et mention de la délivrance du brevet: **12.03.2003**
(21) Numéro de dépôt: 01490029.4
(22) Date de dépôt: 16.08.2001
(51) Int. Cl.: H02G 3/04

(54) **Plaquettes encliquetables pour chemins à câbles en treillis de fils, montage de telles plaquettes sur des chemins à câbles**
Rastverbindbare Platinen für Kabelrinnen aus Drahtgitter und deren Montage an Kabelrinnen
Snap on plates for cable trays made of wire mesh and mounting on such cable trays

(30) Priorité: 06.10.2000 FR 0012838
(43) Date de publication de la demande: 10.04.2002
(73) Titulaire: Tolmega, S.A., 62400 Bethune (FR)
(72) Inventeur: Colmart, André, 62290 Noeux Les Mines (FR)
(74) Mandataire: Matkowska, Franck

(56) Documents cités:
- EP-A- 0 905 843
- FR-A- 2 766 897
- US-A- 5 062 605

## Description

L'invention se rapporte au domaine technique des systèmes de support de câbles, notamment de câbles électriques et/ou de câbles de télécommunications ou équivalents.

L'invention concerne plus particulièrement les chemins à câbles en treillis de fils.

Par « chemins à câbles en treillis de fils » on désigne ici des chemins à câbles réalisés par assemblage de deux séries de fils, à savoir, une première série de fils, communément appelés fils de chaîne, courant longitudinalement, de manière typiquement rectiligne ou quasi rectiligne sur toute leur longueur ; et une deuxième série de fils, communément appelés fils de trame, établis transversalement, de place en place, le long de ces fils de chaîne.

Les fils de chaîne et les fils de trame sont le plus souvent en alliage métallique et leur assemblage est conventionnellement réalisé par soudage. Les fils de trame sont typiquement en U, de sorte que le chemin à câbles en treillis comprend un panneau. de fond et deux panneaux. latéraux, communément appelés ailes. Par « fils » on désigne ici aussi bien des profilés pleins de section transversale sensiblement ovale ou circulaire, que des profilés de section transversale carrée ou rectangulaire. Les fils de trame peuvent notamment se présenter sous forme de bandes étroites, de section transversale rectangulaire.

Des exemples de chemins à câbles en treillis de fil du type présenté ci-dessus peuvent être trouvés dans les documents suivants: demandes de brevet français publiées sous les numéros 2376539, 2576158, 2599906, 2613146, 2617341, 2628904, 2634600, 2645359, 2652206, 2652142, 2669708, 2686393, 2687207, 2691590, 2697313, 2697690, 2698416, 2706973, 2716242, 2716768, 2723270, 2725772, 2725846, 2727186, 2728649, 2734503, 2737355, 2750754, 2766897 ; demandes de brevet européen publiées sous les numéros 0191667, 0229544, 0275185, 0352191, 0355081, 0390668, 0418167, 0553039, 0556137, 0718944, 0818862, 0905843; demandes internationales de brevet publiées sous les numéros 96/08063, 99/06746 ; demandes de brevet allemands publiées sous les numéros 2036325, 4037412, 4336168.

Sur les chemins à câbles en treillis de fils, divers moyens de montage peuvent permettre la fixation d'accessoires, par exemple une platine, un boîtier, une borne. Parmi les moyens connus, le vissage, le boulonnage ou le soudage présentent l'inconvénient de nécessiter un outil pour la mise en place de l'accessoire.

Le document FR-A-2716768 décrit un élément de montage d'une platine support d'accessoires, cette platine étant monté par encliquetage sur des cavaliers, ces cavaliers étant eux-mêmes montés par encliquetage sur les fils du chemin à câbles.

Le montage décrit dans le document FR-A-2716768 permet de ne pas employer d'outils pour mettre en place des accessoires sur les chemins à câbles en treillis de fils, mais ce montage présente plusieurs inconvénients.

Un premier inconvénient est de nécessiter l'emploi de deux cavaliers de montage pour chaque platine support : la fabrication et la mise en place de trois pièces pour chaque support d'accessoires est coûteuse et relativement longue.

Un deuxième inconvénient au montage décrit dans le document FR-A-2716768 est que le support d'accessoires est conçu pour être encliqueté suivant une seule direction de montage avec un écartement imposé pour les cavaliers de montage.

L'invention vise à fournir un support d'accessoires pour chemins à câbles en treillis de fils ne présentant pas les inconvénients des supports de l'art antérieur.

A cette fin, l'invention se rapporte selon un premier aspect à une plaquette encliquetable sur chemins à câbles en treillis de fils à maille rectangulaire, cette plaquette comprenant des moyens permettant son encliquetage sur les fils du chemin à câbles suivant deux directions sensiblement perpendiculaires.

Selon diverses réalisations, cette plaquette présente les caractères suivants, éventuellement combinés :
- elle est de forme sensiblement rectangulaire, deux bords longitudinaux de la plaquette permettant un encliquetage de celle-ci sur deux fils distants d'une première valeur, la plaquette comprenant deux bords transversaux permettant un encliquetage de celle-ci sur deux fils distants d'une deuxième valeur, inférieure ou égale à la première ;
- ses bords longitudinaux ou ses bords transversaux présentent une courbure complémentaire au profil des fils du chemin à câbles ;
- elle comprend une partie centrale sensiblement plane pourvue d'un trou traversant, par exemple, oblong ;
- elle comprend deux bords longitudinaux en saillie et deux bords transversaux pourvus de gorges d'encliquetage, disposées aux angles de la plaquette.

L'invention se rapporte, selon un deuxième aspect, au montage d'une plaquette telle que présentée ci-dessus, sur un chemin à câbles en treillis de fils, l'encliquetage de la plaquette étant obtenu, pour au moins une des directions d'encliquetage, par écartement de deux fils du chemin à câbles par introduction de la plaquette entre ces deux fils.

Dans une réalisation, l'encliquetage de la plaquette est obtenu, pour au moins une des directions d'encliquetage, par rapprochement de deux fils du chemin à câbles, enserrés entre deux bords opposés de la plaquette.

Dans une réalisation, l'encliquetage de la plaquette est coulissant suivant au moins une des directions d'encliquetage.

Dans une réalisation, la plaquette est encliquetée sur deux fils de trames de tronçons contigus, formant ainsi articulation entre ces deux tronçons.

Dans une autre réalisation, la plaquette est encliquetée sur deux mailles de tronçons de chemins à câbles disposés côte à côte.

D'autres objets et avantages de l'invention apparaîtront au cours de la description suivante de modes de réalisation, description qui va être réalisée en se référant aux dessins annexés dans lesquels :
- la figure 1 est une vue en plan d'une plaquette selon un mode de réalisation de l'invention, le principe de montage de cette plaquette sur les fils de chaîne ou les fils de trame d'un chemin à câbles étant schématisé;
- la figure 2 est une vue d'une aile de chemin à câble en treillis de fils sur laquelle est encliquetée une plaquette telle que représentée en figure 1 ;
- la figure 3 est une vue en coupe de deux chemins à câbles en treillis de fils sur lesquels sont encliquetées des plaquettes en face externe (figure 3 gauche) ou interne (figure 3 droite) d'une aile ;
- la figure 4 est un schéma de principe de l'emploi d'une plaquette selon l'invention pour le raccordement de deux chemins à câbles.

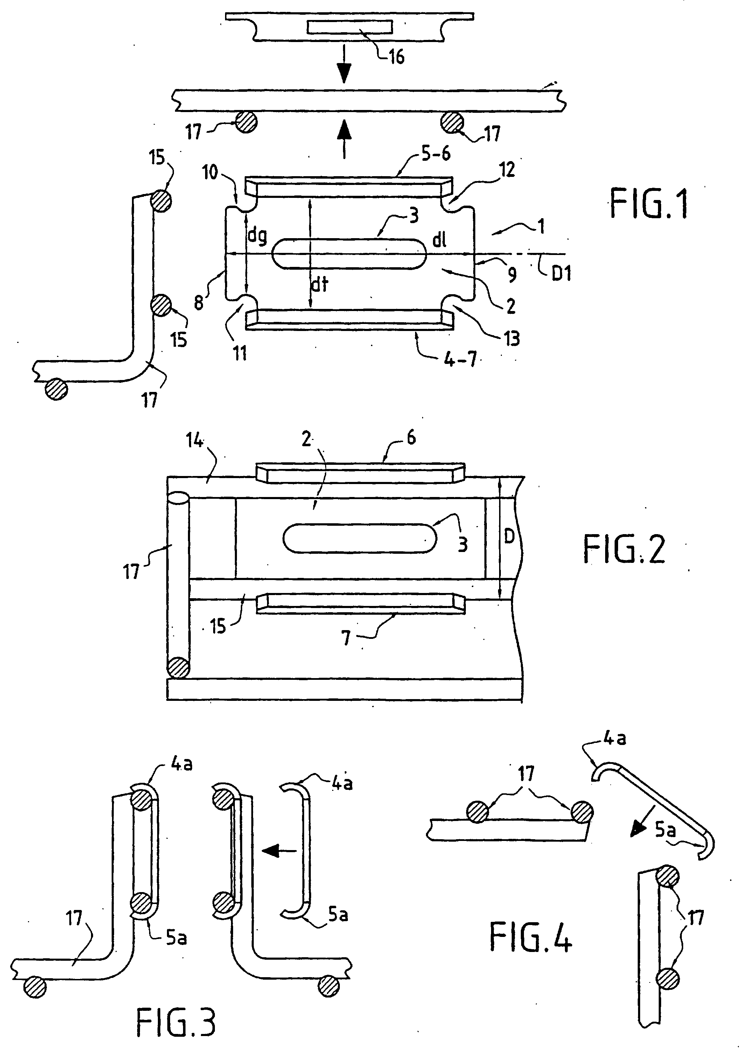

On se reporte tout d'abord à la figure 1.

La plaquette 1 représentée en figure 1 comprend une partie centrale 2 sensiblement plane pourvue d'un trou central traversant 3 s'étendant suivant une direction D1 dite longitudinale.

Dans le mode de réalisation représenté, ce trou central traversant est oblong. Dans d'autres modes de réalisation, ce trou n'est pas central et/ou non oblong.

Cette plaquette 1, lorsque vue en plan, s'inscrit dans une enveloppe rectangulaire et comprend deux bords longitudinaux 4,5 sur chacun desquels saille une bordure d'encliquetage 6,7. La plaquette 1 comprend deux bords transversaux 8,9 pourvus chacun de deux gorges latérales 10,11 s'étendant aux angles de la plaquette 1.

Les bordures d'encliquetage 6,7 ne s'étendent pas perpendiculairement à la partie centrale 2 de la plaquette.

La distance transversale dt entre les bordures longitudinales 6,7 est sensiblement égale à une distance D séparant deux fils du chemin à câbles.

Ces fils peuvent être par exemple deux fils de chaînes les plus proches voisins, ainsi qu'il est représenté en figure 2, la plaquette 1 étant encliquetée sur ces fils de chaîne 14,15.

Il est entendu toutefois que ces fils support de plaquette peuvent, en variante, être deux fils de trame du chemin à câbles, ces fils de trame étant voisins ou séparés par un ou plus d'un fil de trame.

De même, les fils de chaîne sur lesquels est montée la plaquette 1 peuvent être séparés par un ou plusieurs fils de chaîne.

La plaquette 1 peut ainsi être montée par encliquetage, suivant une première direction d'encliquetage, entre deux fils de chaîne ou de trame, sur une aile, une paroi intermédiaire ou la paroi de fond d'un chemin à câbles en treillis de fils.

L'encliquetage transversal peut être prévu avec serrage ou être de typé coulissant suivant la direction longitudinale D1.

L'encliquetage transversal peut être réalisé en face externe du chemin à câbles, comme représenté en figure 1, ou en face interne.

Les quatre gorges 10-13 ménagées aux coins de la plaquette 1 présentent des courbures complémentaires aux profils des fils de chaîne ou de trame. Il est ainsi possible, comme représenté en figure 1, d'encliqueter la plaquette 1, suivant une direction longitudinale, sur deux fils de chaîne ou de trame.

De manière analogue à ce qui a été dit pour l'encliquetage transversal, l'encliquetage longitudinal peut être réalisé :
- entre fils immédiatement voisins ou entre deux fils séparés par un plus d'un fil ;
- sur fils de chaîne ou fils de trame, en face interne ou en face externe du chemin à câble;
- avec ou sans possibilité de coulissement de la plaquette, en fonction de la force de serrage issu de l'encliquetage, cette force étant fonction notamment des rapports entre la distance dg entre gorges et l'écartement des fils supports, et étant fonction également de la rigidité des fils et de la plaquette, ces variables pouvant être ajustées par un homme du métier.

La plaquette 1 peut être pourvue, comme représenté en figure 1, d'au moins un trou traversant 16 sur ses bords longitudinaux.

Dans un mode de mise en oeuvre, ce trou traversant 16 permet le passage d'une éclisse, réalisée en boucle de fil ou sous forme de méplat.

Dans un mode particulier de mise en oeuvre, la plaquette est pourvue de deux trous traversant en regard, sur chacun de ses bords longitudinaux 4,5, une éclisse pouvant être introduite dans l'un ou l'autre de ces trous, voire au travers des deux. La plaquette 1 peut ainsi être employée pour le guidage en coulissement et/ou le maintien en position d'éclisses de montage.

On se reporte maintenant aux figures 3 et 4.

En figure 3, est illustrée la possibilité de montage d'une plaquette du type général ci-dessus, tant en face externe (figure 3 gauche) qu'en face interne (figure 3 droite) d'un chemin à câbles en treillis de fils.

Sur la figure 3, la plaquette 1 est encliquetée sur les fils de chaîne d'une aile de chemin à câbles, ces fils de chaîne étant disposés à l'extérieur par rapport aux fils de trame. Il est entendu toutefois que le montage sur face externe ou interne de la plaquette pourrait être réalisé sur les fils de chaîne montés à l'intérieur par rapport aux fils de trame.

La plaquette représentée en figure 3 est pourvue de bords longitudinaux 4a,5a courbes, épousant la courbure des fils du treillis. Le cas échéant, les bords longitudinaux 4a,5a peuvent être pourvus de saillies augmentant l'effort de serrage lors de l'encliquetage.

En figure 4, est schématisé l'emploi d'une plaquette telle que représentée en figure 3 pour l'articulation de deux tronçons de chemins à câbles en treillis de fils. Les deux bords longitudinaux 4a,5a de la plaquette 1 sont placés contre les fils de trame 17 de deux tronçons successifs.

La plaquette 1 selon l'invention peut être encliquetée suivant une direction transversale et/ou une direction longitudinale, et permet ainsi le montage de différents accessoires, ou le guidage d'éclisses, sur un chemin à câbles en treillis de fils à maille rectangulaire.

La plaquette peut également être encliquetée entre deux mailles de tronçons de chemins à câbles disposés côte à côte, sensiblement parallèle entre eux ou non.

## Revendications

1. Plaquette encliquetable sur chemin à câbles en treillis de fils à maille rectangulaire, **caractérisée en ce qu'**elle comprend des moyens permettant son encliquetage sur les fils du chemin à câbles suivant deux directions sensiblement perpendiculaires.

2. Plaquette suivant la revendication 1, **caractérisée en ce qu'**elle est de forme sensiblement rectangulaire, deux bords longitudinaux (4,5) de la plaquette permettant un encliquetage de celle-ci sur deux fils distants d'une première valeur, la plaquette comprenant deux bords transversaux (8,9) permettant un encliquetage de celle-ci sur deux fils distants d'une deuxième valeur, inférieure ou égalé à la première.

3. Plaquette suivant la revendication 2, **caractérisée en ce que** ses bords longitudinaux (4,5) ou ses bords transversaux (8,9) présentent une courbure complémentaire au profil des fils du chemin à câbles.

4. Plaquette suivant l'une quelconque des revendications 1 à 3, **caractérisé** en en ce qu'elle comprend une partie centrale (2) sensiblement plane pourvue d'un trou traversant (3).

5. Plaquette suivant l'une quelconque des revendications 1 à 4, **caractérisé en ce qu'**elle comprend deux bords longitudinaux en saillie et deux bords transversaux pourvus de gorges d'encliquetage (10-13), disposées aux angles de la plaquette.

6. Montage d'une plaquette telle que présentée dans l'une quelconque des revendications 1 à 5 sur un chemin à câbles en treillis de fils, **caractérisé en ce que** l'encliquetage de la plaquette est obtenu, pour au moins une des directions d'encliquetage, par écartement de deux fils du chemin à câbles par introduction de la plaquette entre ces deux fils.

7. Montage d'une plaquette telle que présentée dans l'une quelconque des revendications 1 à 5 sur un chemin à câbles en treillis de fils, **caractérisé en ce que** l'encliquetage de la plaquette est obtenu, pour au moins une des directions d'encliquetage, par rapprochement de deux fils du chemin à câbles, enserrés entre deux bords opposés de la plaquette.

8. Montage d'une plaquette suivant la revendication 6 ou 7, **caractérisé en ce que** l'encliquetage de la plaquette est coulissant suivant au moins une des directions d'encliquetage.

9. Montage d'une plaquette suivant la revendication 6 ou 7, **caractérisé en ce que** la plaquette est encliquetée sur deux fils de trames de tronçons contigus, formant ainsi articulation entre ces deux tronçons.

10. Montage d'une plaquette suivant la revendication 6 ou 7, **caractérisé en ce que** la plaquette est encliquetée entre deux mailles de tronçons de chemins à câbles disposés côte à côte.

## Claims

1. Plate which can be clicked on to a wire netting cable track with a rectangular mesh, **characterised in that** it comprises means which enable it to be clicked on to the wires of the cable track along two more or less perpendicular directions.

2. Plate according to Claim 1, **characterised in that** it is more or less rectangular in shape, two longitudinal edges (4, 5) of the plate enabling it to be clicked on to two wires apart by a first distance, the plate comprising two transverse edges (8, 9) enabling it to be clicked on to two wires apart by a second distance, shorter than or equal to the first.

3. Plate according to Claim 2, **characterised in that** its longitudinal edges (4, 5) or its transverse edges (8, 9) have a curvature complementary to the profile of the wires of the cable track.

4. Plate according to any one of the Claims 1 to 3, **characterised in that** it includes a more or less flat centre part (2) in which there is a through hole (3).

5. Plate according to any one of the Claims 1 to 4, **characterised in that** it has two projecting longitudinal edges and two transverse edges provided with click-on grooves (10 - 13) arranged at the corners of the plate.

6. Fitting a plate such as that mentioned in any one of the Claims 1 to 5 to a cable track made from wire netting, **characterised in that** clicking on the plate is achieved, for at least one of the click-on directions, by spacing two wires of the cable track by inserting the plate between these two wires.

7. Fitting a plate such as that mentioned in any one of the Claims 1 to 5 to a cable track made from wire netting, **characterised in that** clicking on the plate is achieved, for at least one of the click-on directions, by bringing two wires of the cable track towards each other, clasped between two opposite edges of the plate.

8. Fitting a plate according to Claim 6 or 7, **characterised in that** the plate is clicked on by sliding in at least one of the click-on directions.

9. Fitting a plate according to Claim 6 or 7, **characterised in that** the plate is clicked on to two weft wires of adjacent sections, thus forming a link between these two sections.

10. Fitting a plate according to Claim 6 or 7, **characterised in that** the plate is clicked on between two meshes of cable track sections arranged side by side.

## Patentansprüche

1. Plättchen, das auf einem Kabeltrog aus einem Drahtgeflecht mit rechteckigen Maschen eingerastet werden kann, **dadurch gekennzeichnet, dass** es Einrichtungen aufweist, die sein Einrasten auf den Drähten des Kabeltroges in zwei im wesentlichen senkrecht zueinander verlaufenden Richtungen erlauben.

2. Plättchen nach Anspruch 1, **dadurch gekennzeichnet, dass** es eine im wesentlichen rechteckige Form hat, wobei zwei Längsränder (4,5) des Plättchens das Einrasten desselben auf zwei in einem ersten Abstand voneinander angeordneten Drähten erlauben, wobei das Plättchen zwei Querränder (8,9) aufweist, die ein Einrasten desselben auf zwei in einem zweiten Abstand, der geringer oder gleich ist wie der erste Abstand, voneinander angeordneten Drähten erlauben.

3. Plättchen nach Anspruch 2, **dadurch gekennzeichnet, dass** seine Längsränder (4,5) oder seine Querränder (8,9) eine Krümmung aufweisen, die komplementär zum Profil der Drähte des Kabeltroges ist.

4. Plättchen nach einem der Ansprüche 1 bis 3, **dadurch gekennzeichnet, dass** es einen im wesentlichen ebenen zentralen Abschnitt (2) aufweist, der mit einem durchgehenden Loch (3) versehen ist.

5. Plättchen nach einem der Ansprüche 1 bis 4, **dadurch gekennzeichnet, dass** es zwei auskragende Längsränder und zwei Querränder umfasst, die mit Einrastnuten (10-13) versehen sind, die in den Ecken des Plättchens angeordnet sind.

6. Montage eines Plättchens, wie es in einem der Ansprüche 1 bis 5 dargestellt ist, auf einem Kabeltrog aus Drahtgeflecht, **dadurch gekennzeichnet, dass** das Einrasten des Plättchens in mindestens einer der Einrastrichtungen dadurch erzielt wird, dass man zwei Drähte auseinanderschiebt, indem man das Plättchen zwischen diese beiden Drähte einführt.

7. Montage eines Plättchens wie es in einem der Ansprüche 1 bis 5 dargestellt ist, auf einem Kabeltrog aus Drahtgeflecht, **dadurch gekennzeichnet, dass** das Einrasten des Plättchens in mindestens einer der Einrastrichtungen dadurch erzielt wird, dass man zwei Drähte des Kabeltroges, die zwischen zwei entgegengesetzten Rändern des Plättchens eingespannt sind, einander annähert.

8. Montage eines Plättchens nach Anspruch 6 oder 7, **dadurch gekennzeichnet, dass** das Einrasten des Plättchens in mindestens einer der Einrastrichtungen verschiebbar ist.

9. Montage eines Plättchens nach Anspruch 6 oder 7, **dadurch gekennzeichnet, dass** das Plättchen auf zwei Schussdrähten von aneinandergrenzenden Abschnitten so eingerastet wird, dass zwischen diesen beiden Abschnitten eine Gelenkverbindung entsteht.

10. Montage eines Plättchens nach Anspruch 6 oder 7, **dadurch gekennzeichnet, dass** das Plättchen zwischen zwei Maschen von Kabeltrog-Abschnitten eingerastet wird, die nebeneinander angeordnet sind.
